(19) Europäisches Patentamt

European Patent Office

Office européen des brevets

(11) **EP 2 695 858 B1**

(12) **FASCICULE DE BREVET EUROPEEN**

(45) Date de publication et mention
de la délivrance du brevet:
**16.09.2015 Bulletin 2015/38**

(51) Int Cl.:
***F01N 3/20*** *(2006.01)*

(21) Numéro de dépôt: **12305991.7**

(22) Date de dépôt: **09.08.2012**

(54) **Système de stockage et de délivrance d'ammoniac gazeux**

System zur Lagerung und Abgabe von gasförmigem Ammoniak

System for storing and delivering gaseous ammonia

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**12.02.2014 Bulletin 2014/07**

(73) Titulaire: **Aaqius & Aaqius S.A.**
**1207 Genève (CH)**

(72) Inventeurs:
• **Dementhon, Jean-Baptiste**
**75011 Paris (FR)**

• **Levy, Michael Francis**
**75015 Paris (FR)**

(74) Mandataire: **Regimbeau**
**20, rue de Chazelles**
**75847 Paris Cedex 17 (FR)**

(56) Documents cités:
**EP-A1- 2 181 963      EP-A1- 2 386 523**
**EP-A1- 2 441 933**

**Description**

**Domaine de l'invention**

L'invention concerne d'une façon générale le stockage de l'ammoniac dans des applications de réduction des oxydes d'azote NOx par réduction catalytique sélective (SCR), notamment pour la réduction des émissions de polluants par les moteurs thermiques, en particulier les moteurs diesel.

**Etat de l'art**

Dans la recherche de solutions moins polluantes dans le secteur automobile, le stockage de gaz connait de plus en plus d'applications potentielles. Pour repousser les deux limites traditionnelles du stockage de gaz, à savoir densité et sécurité, des matériaux solides absorbeurs de gaz font l'objet d'un intérêt particulier. Disposer de solutions simples, performantes, faciles à produire pour le stockage de gaz par ces matériaux absorbeurs est un enjeu important à moyen terme pour l'industrie automobile. Le document US2001/0053342 décrit ainsi le principe d'un stockage chimique de gaz ammoniac et son utilisation pour la dépollution des NOx par post-traitement SCR.

Un système de stockage pour matériau absorbeur de gaz doit obéir à des contraintes techniques spécifiques. Il doit d'abord présenter une autonomie élevée, qui se traduit par un volume interne disponible pour le matériau le plus élevé possible. Cependant, le système doit présenter une compacité globale suffisante pour permettre une intégration aisée dans le véhicule. La réalisation d'un réservoir de grande dimension, capable de supporter une pression élevée, typiquement supérieure à 8 bar, pose des problèmes de conception, d'intégration et de maintenance. Par exemple, il est difficile de réaliser des réservoirs de stockage aux formes non cylindriques. Il résulte de ces contraintes que les systèmes de stockage existants sont volumineux et lourds.

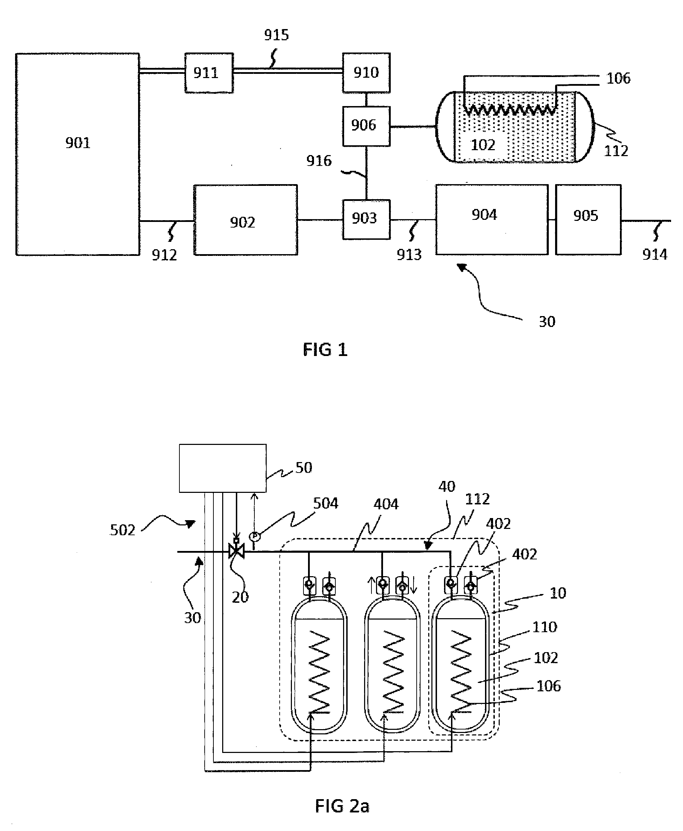

En référence à la figure 1, on a représenté schématiquement un moteur thermique équipé d'un système de post-traitement SCR par injection d'ammoniac selon l'art antérieur.

Un moteur 901 est piloté par un calculateur électronique 911. En sortie du moteur, des gaz d'échappement 912 sont dirigés vers un système de dépollution 902. Le système de dépollution 902 peut comprendre un catalyseur d'oxydation ou un catalyseur à trois voies. Le système de dépollution peut en outre comprendre un filtre à particules.

De l'ammoniac 916 est injecté au niveau d'un circuit d'échappement 30 du moteur et mélangé aux gaz d'échappement au moyen d'un module d'injection 903 disposé par exemple en aval de l'élément de dépollution 902 pour former un mélange ammoniac / gaz d'échappement 913. Le mélange ammoniac / gaz d'échappement 913 traverse ensuite un catalyseur SCR 904 qui permet la réduction des NOx par l'ammoniac. Des éléments complémentaires de post-traitement 905 peuvent être positionnés après le catalyseur SCR 904. Les éléments complémentaires 905 peuvent comprendre un filtre à particules ou un catalyseur d'oxydation. Les gaz d'échappement se présentent ainsi sous une forme de gaz d'échappement dépollués 914 en sortie des éléments complémentaires 905. Les gaz d'échappement dépollués sont ensuite dirigés vers une sortie d'échappement 917. Ainsi l'échappement 30 comprend, disposés de l'amont, côté moteur 901, à l'aval, côté sortie 917, l'élément de dépollution 902, le module d'injection 903, le catalyseur SCR 904, et les éléments complémentaires 905.

Pour assurer une alimentation et un dosage de l'ammoniac 916 en entrée du module d'injection 903, le système comprend une enceinte de stockage d'ammoniac 112 selon l'art antérieur contenant un matériau de stockage 102 pouvant être piloté en température par un moyen de chauffage 106. Le moyen de chauffage 106 comprend par exemple une résistance électrique ou un échangeur de chaleur alimenté par un fluide caloporteur tel que le liquide de refroidissement moteur.

L'enceinte de stockage 112 est connectée à un dispositif 906 de contrôle en pression de l'enceinte et de dosage de l'ammoniac vers le module d'injection 903. Ce dispositif 906 peut être piloté par un contrôleur électronique dédié 910 relié au calculateur électronique 911 du moteur.

Le système comprend ainsi un circuit d'alimentation en ammoniac comprenant, d'amont en aval dans le sens de circulation de l'ammoniac, l'enceinte de stockage 102, le dispositif 906, et le module d'injection 903 dans l'échappement 30.

Dans une configuration alternative non représentée, le dispositif 906 peut être directement piloté par le calculateur moteur 911.

Un inconvénient d'une telle solution est qu'un réservoir unique de grande dimension est difficile à piloter en pratique. D'une part, un tel réservoir est difficile à piloter en phase d'utilisation sur un véhicule en marche, c'est-à-dire en phase de désorption de gaz, car un tel réservoir ne permet pas d'assurer un temps de réponse rapide en maintenant une précision et une dynamique du contrôle en pression. Par ailleurs un tel réservoir nécessite un besoin énergétique important pour assurer la désorption du gaz. D'autre part, un réservoir unique de grande dimension est difficile à piloter dans sa phase de recharge, c'est-à-dire dans sa phase d'absorption, avec notamment des durées d'absorption nécessairement très longues.

La réalisation d'un tel système de stockage de gaz adapté à l'automobile doit ainsi prendre en compte un grand nombre de contraintes parmi lesquelles figurent la gestion thermique du matériau, la compacité volumique du système, sa masse, sa pilotabilité, son coût de réalisation, ou encore son ergonomie lors d'une étape de maintenance par le client ou le concessionnaire.

Ainsi, on a déjà envisagé d'avoir recours à plusieurs réservoirs, qui deviennent alors des sous-systèmes du système de stockage. Par ce moyen on cherche à augmenter la performance du système de stockage en améliorant la gestion thermique du matériau de stockage, l'intégration du système grâces à des sous-systèmes de stockage de petites tailles qui simplifient l'intégration sur véhicule, ou encore l'ergonomie de l'étape de maintenance par le démontage de plusieurs sous-systèmes petits et légers.

Il existe des systèmes de stockage de gaz NH3 partitionnés en plusieurs cellules pour permettre de limiter le chauffage à une partie seulement du matériau de stockage. EP2 181 963 décrit un tel système. De tels systèmes de stockage multi-cellules présentent cependant un coût de réalisation important de par le nombre de cellules et d'équipements associés. De plus, pour de tels systèmes multi-cellules, les commandes telles que la délivrance d'ammoniac, la gestion de la pression, ou la gestion de la quantité d'ammoniac restante dans chaque cellule sont complexes à mettre en place.

De tels systèmes multi-cellules posent également des problèmes de compacité. En effet, ils nécessitent un grand nombre cellules de faible contenance, donc un volume de matière plus important au total, plus de composants pour le pilotage et plus de composants pour l'intégration du système sur véhicule tels que les fixations, les accroches ou encore des écrans thermique.

## Résumé de l'invention

Un but de l'invention est de fournir un système permettant de pallier ces inconvénients. En particulier, un but de l'invention est d'assurer une gestion optimisée du stockage de gaz dans un système à cellules multiples.

A cet effet, il est prévu un système de stockage et de délivrance d'ammoniac gazeux à une unité de consommation selon la revendication 1.

L'invention est avantageusement complétée par les caractéristiques suivantes, prises seules ou en une quelconque de leurs combinaisons techniquement possibles :

- l'interface de sortie comprend pour chaque cellule un clapet de sortie permettant la sortie d'ammoniac gazeux de la cellule lorsque la pression interne est supérieure à une pression en aval du clapet de sortie ;
- le système comprend un moyen de régulation de débit d'ammoniac gazeux vers l'unité de consommation, l'interface de sortie connectant la pluralité de cellules au moyen de régulation de débit, et
- l'interface de sortie comprend un canal commun, en aval des clapets de sortie, connectant les clapets de sortie de la pluralité de cellules et le moyen de régulation de débit, de sorte que l'ouverture d'un clapet de sortie provoque la fermeture des autres clapets de sortie par différence de pression, et
- le dispositif de commande comprend des moyens de commande du moyen de régulation de débit;
- le dispositif de commande comprend un capteur de pression dans l'interface de sortie;
- le système de commande commun est apte à estimer pour chaque cellule sa pression interne en fonction de la commande du moyen d'ajustement de la pression de la cellule et d'une mesure d'un paramètre choisi dans un groupe comprenant des variables d'état de la cellule et la pression mesurée par le capteur de pression de l'interface de sortie;
- le moyen de régulation de débit est une électrovanne;
- au moins un moyen d'ajustement de la pression interne comprend un moyen de refroidissement;
- le matériau de stockage d'au moins une cellule est réparti dans une pluralité de compartiments communicant librement entre eux;
- le matériau de stockage comprend un sel pulvérulent d'un chlorure de métal alcalino-terreux;
- pour chaque cellule, l'interface d'entrée apte à être connectée à un moyen de remplissage pour remplir la cellule indépendamment des autres cellules; est distincte de l'interface de sortie;
- l'interface d'entrée ou la pluralité d'interfaces d'entrée comprend un clapet d'entrée anti-retour passif permettant l'entrée d'ammoniac gazeux dans la pluralité de cellules ou l'une de la pluralité de cellules lorsque la pression interne est inférieure à une pression en amont du clapet d'entrée;
- l'interface de sortie est l'interface d'entrée apte à être connectée à un moyen de remplissage pour remplir la cellule indépendamment des autres cellules;
- chaque cellule est démontable indépendamment des autres cellules pour subir une opération de remplissage.

L'invention concerne également un procédé de délivrance d'ammoniac gazeux à une unité de consommation par un système selon l'une des revendications 1 à 13.

L'invention est avantageusement complétée par les caractéristiques suivantes, prises seules ou en une quelconque de leurs combinaisons techniquement possibles :

- le système comprend, pour chaque cellule un clapet de sortie permettant la sortie d'ammoniac gazeux de la cellule lorsque la pression interne est supérieure à une pression en aval du clapet de sortie, et un moyen de régulation de débit d'ammoniac gazeux vers l'unité de consommation, l'étape de délivrance comprenant des sous-étapes consistant à :

  o transmettre de l'ammoniac gazeux de la cellule donnée à un canal commun, en aval des clapets de sortie, connectant les clapets de sortie de la pluralité de cellules et le moyen de régulation de débit, en provoquant l'ouverture du clapet de sortie de la cellule donnée par différence de pression entre la cellule donnée et le canal commun,
  o provoquer la fermeture des clapets de sortie des autres cellules par différence de pression entre le canal commun et les autres cellules,
  o ouvrir le moyen de régulation pour délivrer à l'unité de consommation l'ammoniac gazeux transmis au canal commun,

- le procédé comprend en outre des étapes consistant à :

  o réaliser une estimation de la pression interne de chaque cellule en fonction de la commande de moyens d'ajustement de pression de la cellule,
  o détecter le dépassement d'une valeur seuil par la pression interne de la cellule donnée correspondant à une ouverture du clapet de sortie de la cellule donnée,
  o après détection du dépassement, réaliser pour la cellule donnée une estimation de la pression interne en fonction d'une pression mesurée au niveau du canal commun,
  o réaliser un jaugeage par des moyens de jaugeage de la quantité d'ammoniac gazeux stocké par chaque cellule en fonction des variations de la pression mesurée,

- le procédé comprend des étapes consistant à :

  o calculer pour chaque cellule un coefficient d'intérêt en fonction d'une quantité d'ammoniac jaugée par des moyens de jaugeage, de caractéristiques du matériau de stockage, d'une variable d'état de la cellule et d'une variable d'état du milieu extérieur,
  o comparer les coefficients d'intérêts pour déterminer la cellule donnée.

**Brève description des figures**

D'autres caractéristiques, buts et avantages de l'invention apparaitront lors de la description ci-après d'un mode de réalisation. Aux dessins annexés :

- la figure 1 représente un moteur thermique équipé d'un système de post-traitement SCR par injection d'ammoniac,
- la figure 2a représente un exemple de système de stockage selon un premier mode de réalisation de l'invention dans une phase d'utilisation sur un véhicule,
- la figure 2b représente le système de la figure 2a dans une phase de remplissage,
- la figure 3 représente un exemple de système de stockage selon un deuxième mode de réalisation de l'invention dans une phase de remplissage,
- la figure 4 représente un exemple de système de stockage selon un troisième mode de réalisation de l'invention dans une phase de remplissage,
- la figure 5 illustre schématiquement un exemple de procédé selon un mode de réalisation de l'invention,
- la figure 6 illustre schématiquement une étape de détermination d'une cellule cible d'un exemple de procédé selon un mode de réalisation de l'invention.

**Description détaillée de l'invention**

1. Différents modes de réalisation du système

*a. Premier mode de réalisation*

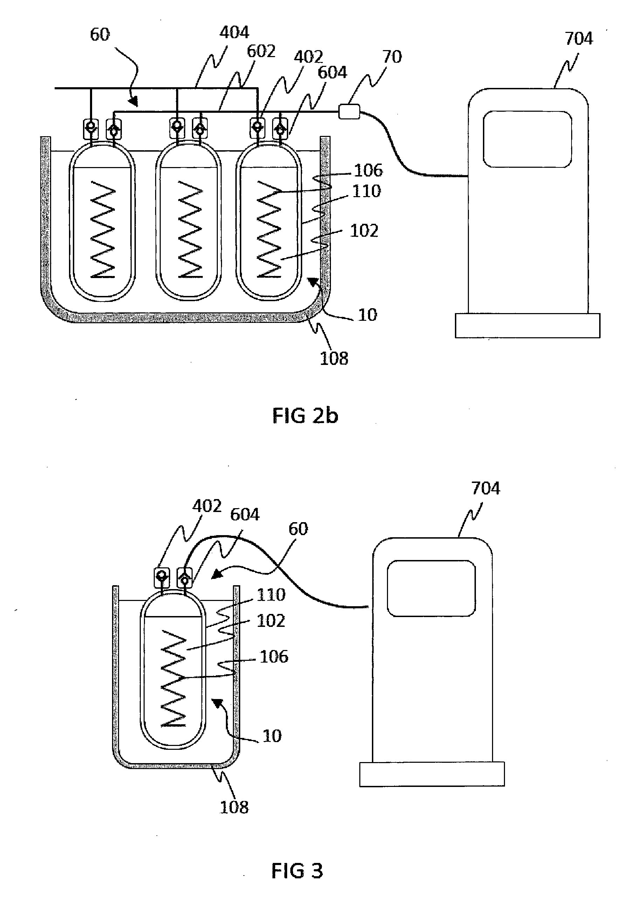

En référence aux figures 2a et 2b, il est décrit un système de stockage et de délivrance d'ammoniac gazeux à une unité de consommation 30 selon un premier mode de réalisation de l'invention.

Le système comprend une pluralité de cellules de stockage 10 d'ammoniac gazeux. Chaque cellule de stockage 10 comprend une enceinte 110 dans laquelle se trouve un matériau de stockage 102 absorbeur d'ammoniac gazeux. Le matériau de stockage 102 est un matériau solide. Le matériau de stockage 102 peut être un sel pulvérulent d'un chlorure de métal alcalino-terreux. Le matériau de stockage 102 peut en outre comprendre un additif formant avec le sel un matériau composite et permettant d'améliorer la conductivité thermique et la robustesse mécanique du matériau. L'additif comprend par exemple des métaux, de la fibre de carbone, du graphite expansé.

Chaque cellule de stockage 10 comprend en outre un moyen de modification d'une pression interne indépendamment des autres cellules. Le moyen de modification de pression interne comprend un moyen de chauffage 106. Le moyen de chauffage 106 est par exemple une résistance. Le moyen de modification de pression interne peut comprendre un moyen de refroidissement 108. Le moyen de refroidissement 108 peut être un dispositif de refroidissement commun à l'ensemble du système ou à une cellule particulière 10. Le moyen de refroidissement 108 comprend par exemple un circuit de circulation d'un fluide de refroidissement, par exemple un fluide aqueux, par exemple de l'eau.

Le matériau de stockage 102 d'au moins une cellule 10 peut être réparti dans une pluralité de compartiments communicant librement entre eux. Chaque compartiment 110 d'une même cellule 10 contient le même matériau et est piloté par le même moyen de modification de pression interne.

Le matériau de stockage 102 et des performances de chaque cellule 10 peuvent être identiques à toutes les cellules 10 ou différents d'une cellule 10 à l'autre. Les performances comprennent par exemple la pression de vapeur qui peut être obtenue dans la cellule 10, la conductivité du matériau de stockage 102 et la capacité calorifique du matériau de stockage 102. De même les cellules 10 peuvent être identiques ou différentes en termes de volume, de forme géométrique, de type et de performance du dispositif de chauffage, ou d'isolant thermique de l'enceinte 110.

Le système comprend un moyen de régulation de débit 20 d'ammoniac gazeux vers l'unité de consommation 30. Le moyen de régulation de débit 20 est par exemple une vanne, préférentiellement une électrovanne.

Le système comprend en outre une interface de sortie 40 connectant la pluralité de cellules 10 au moyen de régulation de débit 20. L'interface de sortie 40 permet le passage du gaz de l'intérieur vers l'extérieur de la cellule. L'interface de sortie 40 est ainsi utilisé lors de l'utilisation du système de stockage pour alimenter en gaz, par exemple en ammoniac, le reste du système, c'est-à-dire lors de la phase de désorption de l'ammoniac.

Pour chaque cellule 10, l'interface de sortie 40 comprend un clapet de sortie 402 anti-retour passif permettant la sortie d'ammoniac gazeux de la cellule 10 lorsque la pression interne est supérieure à une pression en aval du clapet de sortie 402. Le clapet de sortie 402 peut être un dispositif mécanique, par exemple un clapet à bille. Le clapet de sortie 402 est simple à mettre en oeuvre, peu encombrant et peu coûteux. Il est passif et ne nécessite donc pas un pilotage par le calculateur.

L'interface de sortie 40 comprend également un canal commun 404, en aval des clapets de sortie 402. L'interface de sortie 40 connecte les clapets de sortie 402 de la pluralité de cellules 10 et le moyen de régulation de débit 20, de sorte que l'ouverture d'un clapet de sortie 402 provoque la fermeture des autres clapets de sortie 402 par différence de pression.

Le système comprend en outre un dispositif de commande 50 commun à la pluralité de cellules 10, comprenant des moyens de commande 502 du moyen de régulation de débit 20. Les moyens de commande 502 contrôlent également les moyens de modification de pression interne 106 de la pluralité de cellules 10. La commande de ces éléments par les moyens de commande 502 permettent de commander indépendamment chaque cellule 10.

Le dispositif de commande 50 commun peut également comprendre un capteur de pression 504 de l'interface de sortie 40. Le capteur de pression 504 est par exemple inclus dans un module de dosage comprenant le moyen de régulation de débit 20. Le capteur de pression peut être disposé au niveau du canal commun 404, en amont du moyen de régulation de débit 20. Dans ces conditions, la pression mesurée par le capteur de pression 504 du module de dosage est la pression qui règne dans ce canal commun 404.

Le dispositif de commande 50 commun réalise pour chaque cellule 10 une estimation de la pression interne en fonction de la commande de moyen de modification de pression 104 de la cellule 10 et d'une mesure d'une variable d'état de la cellule 10 et/ou de la pression mesuré par le capteur de pression 504 de l'interface de sortie 40.

Le dispositif de commande 50 comprend des moyens de jaugeage de la quantité de gaz dans chaque cellule 10. Le comportement du dispositif de commande 50 vis-à-vis des cellules 10 dépend des caractéristiques propres des cellules 10. Si la définition des cellules 10 est différente, une calibration spécifique à chaque cellule 10 est mise en oeuvre. Ainsi, chaque cellule 10 peut être pilotée indépendamment, chaque cellule est identifié dans le calculateur, et dispose de moyens de contrôle en pression et de jaugeage propre.

Le dispositif de commande 50 peut comprendre des moyens de supervision en charge de la gestion des cellules 10 du système de stockage, qui pilote l'alimentation des moyens de chauffage 106 de chaque cellule 10.

Les moyens de supervision permettent de déterminer la cellule 10 la plus adapté à être utilisée. Une telle détermination peut dépendre de l'état de chargement et de la définition des cellules 10. Typiquement, il pourra être intéressant de basculer sur une cellule 10 qui nécessite beaucoup d'énergie lorsqu'il y a de l'énergie facilement disponible à bord du véhicule, par exemple en cas de circulation en milieu extra-urbain. A l'inverse, lorsque peu d'énergie est disponible à bord du véhicule, par exemple dans le cas d'un démarrage en climat froid, on pourra utiliser de préférence une cellule qui libère du gaz à moindre coût énergétique, au moins pour le démarrage. Il peut s'agir par exemple d'une cellule contenant un sel à haute pression de vapeur, fortement conducteur.

Dans l'invention proposée, le superviseur détermine par calcul à chaque instant et pour chaque cellule, un coefficient alpha représentant l'intérêt de basculer le chauffage et la consommation d'ammoniac sur cette cellule. Ce coefficient est calculé à chaque instant et pour chaque cellule en fonction du taux de chargement, de sa définition, des conditions d'utilisation présentes. Au démarrage la cellule présentant le plus haut coefficient, devient la cellule cible qui est piloté en chauffage. Le changement d'une cellule à l'autre peut être décidé en cours d'utilisation, lorsque le coefficient d'une cellule est supérieur à celui de la cellule actuellement sous pilotage en pression.

Le système peut comprendre une interface d'entrée permettant le passage de gaz de l'extérieur vers l'intérieur de la ou des cellules 10. Cette interface d'entrée est utilisée lors de la phase de remplissage en gaz, par exemple en ammoniac, du matériau de stockage contenu dans la cellule 10.

Le premier mode de réalisation comprend une interface d'entrée 60 commune comprenant un canal commun d'entrée 602 connectant la pluralité de cellules 10, le canal commun 602 étant apte à être connecté à un moyen de remplissage 70 pour remplir en parallèle les cellules 10 au cours d'une opération de remplissage. Le moyen de remplissage 70 peut être un dispositif statique, hors véhicule, contenant le gaz pour le remplissage et des moyens de gestion en température et pression de ce gaz. Le moyen de remplissage 70 comprend par exemple un ensemble pompe-réservoir 704.

En configuration de remplissage, l'ensemble des cellules 10 est alors soumis aux mêmes conditions de température et de pression, pilotées par le moyen de remplissage 70. L'intérêt de cette configuration est d'avoir une interface d'entrée 602 unique pour l'ensemble du système de stockage. Une telle configuration permet une limitation du coût de fabrication du système de stockage et simplifie l'intégration du système de stockage sur un véhicule.

L'interface d'entrée 60 peut comprendre un clapet d'entrée 604 anti-retour passif permettant l'entrée de gaz dans les cellules 10 lorsque la pression interne est inférieure à une pression en amont du clapet d'entrée 604.

*b. Deuxième mode de réalisation*

Selon un deuxième mode de réalisation de l'invention, illustré en Figure 3, le système de stockage sur un véhicule comprend, pour chaque cellule 10, une interface d'entrée 60 apte à être connectée à un moyen de remplissage 70 pour remplir la cellule 10 indépendamment des autres cellules, l'interface d'entrée 60 étant distincte de l'interface de sortie 40.

Les interfaces d'entrée 60 de chaque cellule 10 sont indépendantes les unes des autres. Lors d'une opération de maintenance, chaque cellule 10 est connectée par son interface d'entrée 60 au dispositif de remplissage de gaz. L'intérêt de cette configuration est de permettre un démontage et un remplissage d'une partie du sous-système de stockage uniquement ; il est possible de maintenir sur le véhicule les cellules 10 non déchargées en gaz et de démonter le véhicule pour réaliser l'opération de remplissage uniquement les cellules 10 déchargées en gaz.

Les interfaces d'entrée 60 peuvent comprendre chacune un clapet d'entrée 604 anti-retour passif permettant l'entrée de gaz dans chacune de la pluralité de cellules 10 lorsque la pression interne est inférieure à une pression en amont du clapet d'entrée 604.

*c. Troisième mode de réalisation*

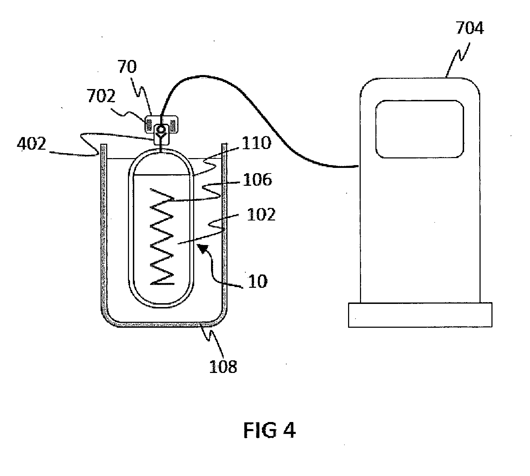

Selon un troisième mode de réalisation, illustré en Figure 4, l'interface de sortie 40 joue également le rôle d'une interface d'entrée apte à être connectée à un moyen de remplissage 70 pour remplir la cellule 10 indépendamment des autres cellules. Chaque clapet de sortie 402 est apte à être leurré par un dispositif aimanté 702 pour permettre l'entrée de gaz dans la cellule 10 lorsque la pression interne est inférieure à une pression en aval du clapet de sortie 402.

Ainsi l'opération de remplissage est réalisée au moyen d'une interface spécifique 702 permettant de leurrer le clapet de sortie 402 anti-retour en autorisant le passage du gaz de l'extérieur vers l'intérieur lorsque la pression extérieure est supérieure à la pression interne à la cellule. L'interface spécifique est par exemple un dispositif aimanté qui vient « lever » une bille de blocage du clapet de sortie 402 par aimantation, alors que cette obture normalement mécaniquement un conduit de sortie par effet de la pression.

Chaque cellule 10 est démontable indépendamment des autres cellules 10 pour subir une opération de remplissage.

2. Différents aspects du procédé

*a. Procédé de délivrance*

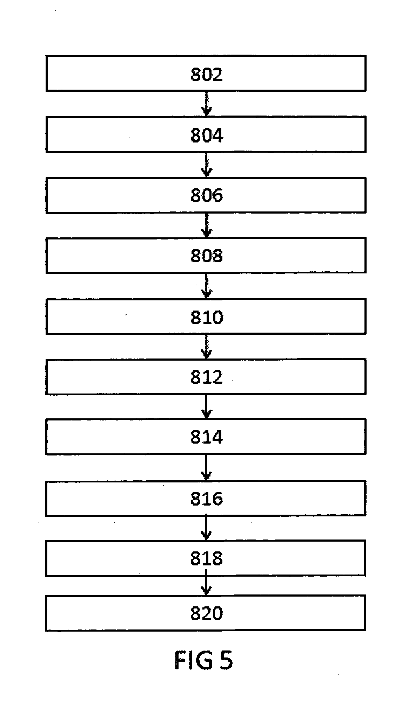

En référence à la Figure 5, il est décrit un procédé de délivrance de gaz, par exemple d'ammoniac gazeux, à une unité de consommation 30, par un système de stockage tel que décrit ci-dessus.

Le procédé peut comprendre une première étape 802 consistant à réaliser une estimation d'une pression interne de chaque cellule 10 en fonction de la commande de moyen de modification de pression 104 de la cellule. L'estimation peut en outre résulter d'une mesure d'une variable d'état de la cellule 10 ou de son environnement, par exemple la température ambiante.

Le procédé comprend une deuxième étape 804 consistant à augmenter la pression interne d'une cellule donnée 10 indépendamment des autres cellules. Cette étape peut comprendre le chauffage de la cellule 10 donnée par le moyen de chauffage 106 dédié. L'étape 804 peut être réalisée simultanément, avant ou après la première étape 802 d'estimation.

Ainsi le dispositif de commande 50, par exemple un calculateur, estime par calcul la pression régnant au sein de la cellule 10. L'augmentation de pression théorique peut être calculée en fonction de l'énergie fournie par le moyen de chauffage 106 et la température ambiante initiale, qui constitue une variable d'état.

Une telle estimation de pression est décrite dans le document US 2010/0021780.

Le procédé comprend une troisième étape 806 consistant à transmettre de l'ammoniac gazeux de la cellule donnée 10 au canal commun 404 en provoquant l'ouverture du clapet de sortie 402 de la cellule donnée 10 par différence de pression entre la cellule donnée 10 et le canal commun 404.

Le procédé comprend une quatrième étape 808 consistant à détecter le dépassement d'une valeur seuil par la pression interne de la cellule donnée 10 correspondant à une ouverture du clapet de sortie 402 de la cellule donnée 10.

Le procédé comprend une cinquième étape 810 consistant à réaliser, après détection du dépassement, pour la cellule donnée 10 une estimation de la pression interne en fonction d'une pression mesurée au niveau du canal commun 404.

Le procédé comprend une sixième étape 812 consistant à provoquer la fermeture des clapets de sortie 402 des autres cellules par différence de pression ou effet de pression entre le canal commun 404 et les autres cellules. Il est ainsi possible de piloter chaque cellule 10 de façon indépendante au moyen du moyen de chauffage 106 propre à chaque cellule 10. La pression qui règne dans le canal commun 404 et telle que mesurée par le capteur de pression 504 est la pression de la cellule 10 alimentée en chauffage.

Par exemple, une augmentation de pression calculée est comparée à un seuil de pression du clapet de sortie 402. Lorsque cette augmentation de pression calculée dépasse un delta de pression correspondant au seuil de pression par un facteur compris entre 1,3 et 3 bars, le dispositif de commande 50 établit que la pression générée au sein de la cellule 10 en chauffage est suffisamment élevée pour ouvrir le clapet de sortie 106 de la cellule 10, et imposer, par effet de la pression, la fermeture des clapets de sortie des autres cellules non alimentées en chauffage. Le dispositif de commande 50 établit ensuite que la pression régnant dans le canal commun 404 et telle que mesurée par le capteur de pression 504 est la pression régnant dans la cellule 10 en chauffage. Le dispositif de commande 50 peuvent alors activer les divers algorithmes de contrôle en pression ou de jaugeage sur la cellule considérée.

Ainsi, chaque cellule 10 peut-être pilotée indépendamment, par un même module de dosage comprenant le capteur de pression 504 et le moyen de régulation de débit 20, en pilotant l'activation du moyen de chauffage 106, et sans nécessiter de piloter par le dispositif de commande 50 l'ouverture ou la fermeture de la cellule 10 par une vanne dédiée comme proposé dans l'état de l'art.

Le procédé comprend une septième étape 814 consistant à ouvrir le moyen de régulation 20 pour délivrer à l'unité de consommation 30 l'ammoniac gazeux transmis au canal commun 404.

Le procédé comprend une huitième étape 816 consistant à réaliser un jaugeage de la quantité d'ammoniac gazeux stocké par chaque cellule 10 en fonction des variations de la pression mesurée.

*b. Détermination de la cellule cible*

Le procédé comprend une neuvième étape 818 consistant à calculer 818 pour chaque cellule 10 un coefficient d'intérêt en fonction de la quantité d'ammoniac jaugée par des moyens de jaugeage, de caractéristiques du matériau de stockage, d'une variable d'état de la cellule et d'une variable d'état du milieu extérieur. La variable d'état du milieu extérieur peut comprendre le profil de consommation de l'unité de consommation 30, typiquement le type de conduite dans le cas où l'unité de consommation 30 est un véhicule.

Le procédé comprend une dixième étape consistant à comparer 820 les coefficients d'intérêts pour déterminer la cellule donnée 10 ou cellule cible. La détermination de la cellule cible peut ainsi être réalisée après tout changement des caractéristiques du système, par exemple après toute opération de délivrance ou de remplissage. La détermination de la cellule cible peut être également réalisée avant les opérations de délivrance ou de remplissage, à partir de données enregistrées par les moyens de commande 50 et de données mesurées.

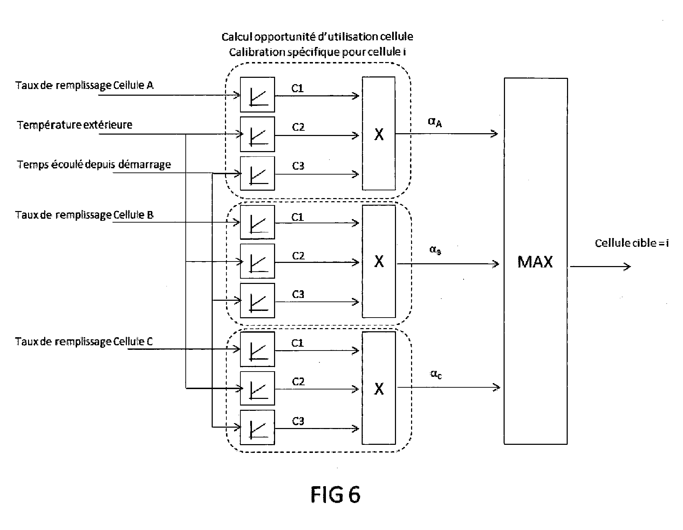

En référence à la figure 6, un exemple de mise en oeuvre de la détermination de la cellule cible est décrit.

Le système de stockage est ici constitué de trois cellules 10 indépendantes A, B et C, munies d'une interface de sortie commune et d'interfaces d'entrée séparées. Les moyens de commande 50 permettent de piloter le moyen de chauffage 106 de chaque cellule 10 indépendamment.

Les trois cellules 10 contiennent un matériau de stockage composite formé par du chlorure de baryum ($BaCl_2$) et d'un additif de type graphite naturel expansé.

Le matériau de stockage 102 contenu dans la cellule A est chargé en ammoniac à 100% de sa capacité maximale.

Le matériau de stockage 102 contenu dans la cellule B est chargé en ammoniac à 10% de sa capacité maximale.

Le matériau de stockage 102 contenu dans la cellule C est formulé de sorte à présenter une conductivité thermique plus élevée que le matériau de stockage 102 des cellules A et B, au détriment d'une densité plus faible en ammoniac. Par exemple, le matériau de stockage 102 de la cellule C contient une quantité supérieure d'additif, et présente un taux de compactage inférieur. Le temps de mise en action de la cellule C est donc plus court que pour les cellules A et B. Par ailleurs, le matériau de stockage 102 de la cellule C est chargé en ammoniac à 30% de sa capacité maximale.

Au démarrage, les moyens de supervision du dispositif de commande 50 déterminent pour chaque cellule 10 le coefficient $\alpha$ représentant l'intérêt de basculer le fonctionnement sur cette cellule 10. Ce coefficient est déterminé pour chaque cellule par un algorithme, par exemple comme le produit de trois facteurs C1, C2 et C3 dépendant respectivement du taux de remplissage de la cellule 10, de la température extérieure, une information disponible dans le calculateur moteur, et du temps écoulé depuis le démarrage moteur.

Pour les cellules A, B et C, C1 correspond au taux de remplissage de la cellule, et vaut « 1 » si la cellule est pleine, et « 0 » si la cellule est vide.

Pour les cellules A et B, C2 vaut « 1 » lorsque la température extérieure est supérieure à 0°C, et C2 vaut « 0,2 » lorsque la température extérieure est inférieure à 0°C.

Pour la cellule C, C2 vaut « 0,2 » lorsque la température extérieure est supérieure à 0°C, et C2 vaut « 1 » si la température est inférieure à 0°C.

Pour les cellules A, B et C, C3 correspond au temps écoulé depuis le démarrage du moteur. C3 vaut « 1 » si le temps écoulé est inférieur à 1h, et C3 vaut « 10 » si C1 est inférieur à « 0,1 » et que le temps écoulé est supérieure à 1 h.

Le coefficient $\alpha$ est déterminé pour chaque cellule comme le produit de ces trois facteurs.

Dans un premier cas, on considère que la température extérieure vaut -15°C et que le véhicule est au démarrage, d'où un temps écoulé nul. On obtient :

$$\alpha_A = C1 * C2 * C3 = 0,7 * 0,2 * 1 = 0,14$$

$$\alpha_B = C1 * C2 * C3 = 0,1 * 0,2 * 1 = 0,02$$

$$\alpha_C = C1 * C2 * C3 = 0,3 * 2 * 1 = 0,6$$

C'est donc la cellule C qui est déterminée comme cellule cible et pilotée en chauffage. En effet, elle correspond à un matériau de stockage 102 présentant une conductivité thermique élevée et donc un temps de mise en action rapide, paramètre critique en conditions froides.

Dans un deuxième cas, on considère que la température extérieure vaut 20°C et que le véhicule est au démarrage, d'où un temps écoulé nul. On obtient :

$$\alpha_A = C1 * C2 * C3 = 0,7 * 1 * 1 = 0,7$$

$$\alpha_B = C1 * C2 * C3 = 0,1 * 1 * 1 = 0,1$$

$$\alpha_C = C1 * C2 * C3 = 0,3 * 0,2 * 1 = 0,06$$

C'est alors la cellule A qui est déterminée comme cellule cible et pilotée en chauffage. En effet, elle permet un démarrage rapide dans des conditions d'utilisation normale.

Dans un troisième cas la température extérieure est de 20°C et le véhicule roule depuis 2h. On obtient :

$$\alpha_A = C1 * C2 * C3 = 0,7 * 1 * 1 = 0,7$$

$$\alpha_B = C1 * C2 * C3 = 0,1 * 1 * 10 = 1$$

$$\alpha_C = C1 * C2 * C3 = 0,3 * 0,2 * 1 = 0,06$$

C'est alors la cellule B qui est déterminée comme cellule cible et pilotée en chauffage. En effet, il s'agit ici de favoriser le basculement sur une cellule 10 quasiment vide dans des conditions où l'énergie à bord est largement disponible, ce qui est le cas pour un véhicule roulant depuis suffisamment longtemps.

Sur cet exemple, les moyens de commande 50 permettent donc selon les cas de vie du système de stockage de cibler la cellule 10 qu'il est le plus opportun d'utiliser pour un fonctionnement optimisé du système de stockage.

D'une façon générale, le procédé permet un pilotage optimisé du système de stockage multi-cellules, en jouant uniquement sur le moyen de chauffage 106 de chaque cellule 10 et au moyen d'un moyen de régulation de débit 20 unique, commun à la pluralité de cellules 10.

Il devient possible d'optimiser le fonctionnement du système de stockage, en utilisant à chaque instant la cellule 10 la plus adapté aux conditions d'utilisation présente, permettant notamment de limiter au juste nécessaire la consommation électrique pour la définition du système de stockage retenu.

Il est possible de déterminer la cellule cible en prenant en compte d'autres paramètres que ceux présentés dans l'exemple. On affecte alors d'autres facteurs Ci à d'autres paramètres. A titre d'exemple non exhaustif, il est possible de recourir à une estimation des conditions de roulage, c'est-à-dire si le véhicule se trouve par exemple en ville, sur route, ou sur autoroute. Un autre paramètre envisageable est la distance à parcourir jusqu'à la prochaine maintenance du véhicule. Le principe de calcul d'un coefficient $\alpha$, produit de plusieurs facteurs, s'applique de la même manière.

De même, ce type de moyen de supervision sera aussi avantageux dans le cas où toutes les cellules 10 sont identiques, en particulier pour gérer de la meilleure façon le basculement entre cellules 10 lors de leur épuisement en ammoniac.

## Revendications

1. Système de stockage et de délivrance d'ammoniac gazeux à une unité de consommation (30), le système comprenant :

   - une pluralité de cellules de stockage (10) d'ammoniac gazeux, comprenant chacune :

     o un matériau de stockage (102) absorbeur d'ammoniac gazeux,
     o un moyen d'ajustement d'une pression interne de chaque cellule indépendamment des autres cellules, comprenant un moyen de chauffage (106),

   - une interface de sortie (40) connectant la pluralité de cellules (10) à l'unité de consommation (30), permettant la sortie d'ammoniac gazeux de la cellule (10) lorsque la pression interne est supérieure à une pression en aval.
   - un dispositif de commande (50) commun à la pluralité de cellules (10), permettant de commander indépendamment l'activité de délivrance d'ammoniac de chaque cellule (10) à l'interface de sortie (40) par des moyens de commande (502) des moyens d'ajustement de la pression interne (106) de la pluralité de cellules (10),

   le système étant **caractérisé en ce qu'**il comprend en outre :

   - une interface d'entrée (60) commune comprenant un canal commun d'entrée (602) connectant la pluralité de cellules (10), le canal commun (602) étant apte à être connecté à un moyen de remplissage (70) pour remplir en parallèle les cellules (10) au cours d'une opération de remplissage, ou
- pour chaque cellule (10), une interface d'entrée (60) apte à être connectée à un moyen de remplissage (70) pour remplir la cellule (10) indépendamment des autres cellules.

2. Système selon la revendication 1, **caractérisé en ce que** l'interface de sortie (40) comprend pour chaque cellule (10) un clapet de sortie (402) permettant la sortie d'ammoniac gazeux de la cellule (10) lorsque la pression interne est supérieure à une pression en aval du clapet de sortie (402).

3. Système selon la revendication 2, **caractérisé en ce que** :

- le système comprend un moyen de régulation de débit (20) d'ammoniac gazeux vers l'unité de consommation (30), l'interface de sortie (40) connectant la pluralité de cellules (10) au moyen de régulation de débit (20), et
- l'interface de sortie (40) comprend un canal commun (404), en aval des clapets de sortie (402), connectant les clapets de sortie (402) de la pluralité de cellules (10) et le moyen de régulation de débit (20), de sorte que l'ouverture d'un clapet de sortie (402) provoque la fermeture des autres clapets de sortie (402) par différence de pression,
- le dispositif de commande (50) comprend des moyens de commande (502) du moyen de régulation de débit (20).

4. Système selon la revendication 3, **caractérisé en ce que** le dispositif de commande (50) comprend un capteur de pression (504) dans l'interface de sortie (40).

5. Système selon la revendication 4, **caractérisé en ce que** le système de commande (50) commun est apte à estimer pour chaque cellule (10) sa pression interne en fonction de la commande du moyen d'ajustement de la pression (104) de la cellule (10) et d'une mesure d'un paramètre choisi dans un groupe comprenant des variables d'état de la cellule (10) et la pression mesurée par le capteur de pression (504) de l'interface de sortie (40).

6. Système selon l'une quelconque des revendications 1 à 5, **caractérisé en ce que** le moyen de régulation de débit (40) est une électrovanne.

7. Système selon l'une quelconque des revendications 1 à 6, **caractérisé en ce qu'**au moins un moyen d'ajustement de la pression interne comprend un moyen de refroidissement (108).

8. Système selon l'une quelconque des revendications 1 à 7, **caractérisé en ce que** le matériau de stockage (102) d'au moins une cellule (10) est réparti dans une pluralité de compartiments communicant librement entre eux.

9. Système selon l'une quelconque des revendications 1 à 8, **caractérisé en ce que** le matériau de stockage (102) comprend un sel pulvérulent d'un chlorure de métal alcalino-terreux.

10. Système selon l'une quelconque des revendications 1 à 9, **caractérisé en ce que**, pour chaque cellule (10), l'interface d'entrée (60) apte à être connectée à un moyen de remplissage (70) pour remplir la cellule (10) indépendamment des autres cellules est distincte de l'interface de sortie (40).

11. Système selon l'une quelconque des revendications 1 à 10, **caractérisé en ce que** l'interface d'entrée (60) ou la pluralité d'interfaces d'entrée comprend un clapet d'entrée (604) anti-retour passif permettant l'entrée d'ammoniac gazeux dans la pluralité de cellules (10) ou l'une de la pluralité de cellules lorsque la pression interne est inférieure à une pression en amont du clapet d'entrée (604).

12. Système selon l'une quelconque des revendications 1 à 9, **caractérisé en ce que** l'interface de sortie (40) est l'interface d'entrée apte à être connectée à un moyen de remplissage (70) pour remplir la cellule (10) indépendamment des autres cellules.

13. Système selon l'une quelconque des revendications 10 à 12, **caractérisé en ce que** chaque cellule (10) est démontable indépendamment des autres cellules (10) pour subir une opération de remplissage.

14. Procédé de délivrance d'ammoniac gazeux à une unité de consommation (30) par un système selon l'une des revendications 1 à 13, le procédé étant **caractérisé en ce qu'il** comprend des étapes consistant à ;

- déterminer une cellule donnée parmi la pluralité de cellules de stockage (10),
- commander les moyens d'ajustement de pression interne de la pluralité de cellules, l'étape comprenant l'augmentation (804) d'une pression interne de la cellule donnée (10) indépendamment des autres cellules, pour permettre la sortie d'ammoniac gazeux de la cellule (10) lorsque la pression interne est supérieure à une pression en aval,
- délivrer (806, 812, 814) de l'ammoniac gazeux de la cellule donnée à l'unité de consommation (30) indépendamment des autres cellules via une interface de sortie (40) connectant la pluralité de cellules (10) à l'unité de consommation (30).

15. Procédé selon la revendication 14, **caractérisé en ce que** le système comprend :

- pour chaque cellule (10) un clapet de sortie (402) permettant la sortie d'ammoniac gazeux de la cellule (10) lorsque la pression interne est supérieure à une pression en aval du clapet de sortie (402),
- un moyen de régulation de débit (20) d'ammoniac gazeux vers l'unité de consommation (30),

l'étape de délivrance comprenant des sous-étapes consistant à :

o transmettre (806) de l'ammoniac gazeux de la cellule donnée (10) à un canal commun (404), en aval des clapets de sortie (402), connectant les clapets de sortie (402) de la pluralité de cellules (10) et le moyen de régulation de débit (20), en provoquant l'ouverture du clapet de sortie (402) de la cellule donnée (10) par différence de pression entre la cellule donnée (10) et le canal commun (404),
o provoquer (812) la fermeture des clapets de sortie (402) des autres cellules par différence de pression entre le canal commun (404) et les autres cellules,
∘ ouvrir (814) le moyen de régulation (20) pour délivrer à l'unité de consommation (30) l'ammoniac gazeux transmis au canal commun (404).

16. Procédé selon la revendication 15, comprenant en outre des étapes consistant à :

- réaliser (802) une estimation de la pression interne de chaque cellule (10) en fonction de la commande de moyens d'ajustement de pression (104) de la cellule,
- détecter (808) le dépassement d'une valeur seuil par la pression interne de la cellule donnée (10) correspondant à une ouverture du clapet de sortie (402) de la cellule donnée (10),
- après détection du dépassement, réaliser (810) pour la cellule donnée (10) une estimation de la pression interne en fonction d'une pression mesurée au niveau du canal commun (404),
- réaliser (816) un jaugeage par des moyens de jaugeage de la quantité d'ammoniac gazeux stocké par chaque cellule (10) en fonction des variations de la pression mesurée.

17. Procédé selon l'une quelconque des revendications 14 à 16, **caractérisé en ce qu'il** comprend des étapes consistant à :

- calculer (818) pour chaque cellule (10) un coefficient d'intérêt en fonction d'une quantité d'ammoniac jaugée par des moyens de jaugeage, de caractéristiques du matériau de stockage, d'une variable d'état de la cellule et d'une variable d'état du milieu extérieur,
- comparer (820) les coefficients d'intérêts pour déterminer la cellule donnée (10).

**Patentansprüche**

1. System zur Lagerung und Ausgabe von gasförmigem Ammoniak an eine Verbrauchseinheit (30), wobei das System umfasst:

- eine Vielzahl von Lagerzellen (10) für gasförmigen Ammoniak, jeweils umfassend:

o ein gasförmigen Ammoniak absorbierendes Lagermaterial (102),
o ein Anpassungsmittel eines internen Drucks jeder Zelle unabhängig von den anderen Zellen, umfassend ein Heizmittel (106),

- eine Ausgangsschnittstelle (40), die die Vielzahl von Zellen (10) an eine Verbrauchseinheit (30) anschließt, die den Ausgang von gasförmigem Ammoniak aus der Zelle (10) erlaubt, wenn der interne Druck höher ist als ein nachgelagerter Druck.
- eine gemeinsame Steuereinheit (50) der Vielzahl von Zellen (10), die die Steuerung unabhängig von der Ausgabeaktivität von Ammoniak jeder Zelle (10) an der Ausgangsschnittstelle (40) durch Steuermittel(502) der Anpassungsmittel des internen Drucks (106) der Vielzahl von Zellen (10) erlaubt,

wobei das System **dadurch gekennzeichnet ist, dass** es darüber hinaus umfasst:

- eine gemeinsame Eingangsschnittstelle (60), umfassend einen gemeinsamen Eingangskanal (602), der die Vielzahl von Zellen (10) anschließt, wobei der gemeinsame Kanal (602) geeignet ist, an ein Füllmittel (70) angeschlossen zu werden, um parallel die Zellen (10) im Verlauf einer Fülloperation zu füllen, oder
- für jede Zelle (10) eine Eingangsschnittstelle (60), die geeignet ist, an ein Füllmittel (70) angeschlossen zu werden, um die Zelle (10) unabhängig von den anderen Zellen zu füllen.

2. System gemäß Anspruch 1, **dadurch gekennzeichnet, dass** die Ausgangsschnittstelle (40) für jede Zelle (10) eine Ausgangsklappe (402) umfasst, die den Ausgang von gasförmigem Ammoniak aus der Zelle (10) zulässt, wenn der interne Druck höher ist als ein nachgeschalteter Druck der Ausgangsklappe (402).

3. System gemäß Anspruch 2, **dadurch gekennzeichnet, dass**:

- das System ein Regulierungsmittel des Durchsatzes (20) gasförmigen Ammoniaks zu einer Verbrauchseinheit (30) umfasst, wobei die Ausgangsschnittstelle (40) die Vielzahl von Zellen (10) mittels einer Durchsatzregulierung (20) anschließt und
- die Ausgangsschnittstelle (40) einen den Ausgangsklappen (402) nachgeschalteten gemeinsamen Kanal (404) umfasst, der die Ausgangsklappen (402) der Vielzahl von Zellen (10) und das Regulierungsmittel des Durchsatzes (20) derart anschließt, dass die Öffnung einer Ausgangsklappe (402) das Schließen der anderen Ausgangsklappen (402) per Druckdifferenz hervorruft,
- die Steuervorrichtung (50) Steuermittel (502) des Regulierungsmittels des Durchsatzes (20) umfasst.

4. System gemäß Anspruch 3, **dadurch gekennzeichnet, dass** die Steuervorrichtung (50) einen Drucksensor (504) in der Ausgangsschnittstelle (40) umfasst.

5. System gemäß Anspruch 4, **dadurch gekennzeichnet, dass** das gemeinsame Steuersystem (50) geeignet ist, für jede Zelle (10) ihren internen Druck in Abhängigkeit von der Steuerung des Anpassungsmittels des Drucks (104) der Zelle (10) und einer Messung eines Parameters, der aus einer Gruppe gewählt ist, die Zustandsvariable der Zelle (10) umfassen, und dem Druck, der von dem Drucksensor (50) der Ausgangsschnittstelle (40) gemessen wird, zu beurteilen.

6. System gemäß Anspruch 1 bis 5, **dadurch gekennzeichnet, dass** das Regulierungsmittel des Durchsatzes (40) ein Magnetventil ist.

7. System gemäß Anspruch 1 bis 6, **dadurch gekennzeichnet, dass** wenigstens ein Anpassungsmittel des internen Drucks ein Abkühlmittel (108) umfasst.

8. System gemäß Anspruch 1 bis 7, **dadurch gekennzeichnet, dass** das Lagermaterial (102) wenigstens einer Zelle (10) in einer Vielzahl von Fächern aufgeteilt ist, die frei miteinander in Verbindung stehen.

9. System gemäß Anspruch 1 bis 8, **dadurch gekennzeichnet, dass** das Lagermaterial (102) ein pulverförmiges Salz eines alkalisch-erdigen Metallchlorids umfasst.

10. System gemäß Anspruch 1 bis 9, **dadurch gekennzeichnet, dass** für jede Zelle (10) die Eingangsschnittstelle (60), die geeignet ist, an ein Füllmittel (70) angeschlossen zu werden, um die Zelle (10) unabhängig von den anderen Zellen zu füllen, von der Ausgangsschnittstelle (40) unterschiedlich ist.

11. System gemäß Anspruch 1 bis 10, **dadurch gekennzeichnet, dass** die Eingangsschnittstelle (60) oder die Vielzahl von Eingangsschnittstellen ein passives Rückschlags-Eingangsventil (604) umfasst, das den Eingang von gasförmigem Ammoniak in die Vielzahl von Zellen (10) oder eine der Vielzahl von Zellen zu erlauben, wenn der interne Druck niedriger ist als ein der Eingangsklappe (604) vorgelagerter Druck.

**12.** System gemäß Anspruch 1 bis 9, **dadurch gekennzeichnet, dass** die Ausgangsschnittstelle (40) die Eingangsschnittstelle ist, die geeignet ist, an ein Füllmittel (70) angeschlossen zu werden, um die Zelle (10) unabhängig von den anderen Zellen zu füllen.

**13.** System gemäß Anspruch 10 bis 12, **dadurch gekennzeichnet, dass** jede Zelle (10) unabhängig von den anderen Zellen (10) abbaubar ist, um einer Fülloperation unterzogen zu werden.

**14.** Ausgabeverfahren von gasförmigem Ammoniak an eine Verbrauchseinheit (30) durch ein System gemäß Anspruch 1 bis 13, wobei das Verfahren **dadurch gekennzeichnet ist, dass** es die folgenden Stufen umfasst:

- Bestimmung einer bestimmten Zelle aus der Vielzahl von Lagerzellen (10),
- Steuerung der Anpassungsmittel des internen Drucks der Vielzahl von Zellen, wobei die Stufe die Erhöhung (804) eines internen Drucks der bestimmten Zelle (10) unabhängig von den anderen Zellen umfasst, um den Ausgang von gasförmigem Ammoniak der Zelle (10) zu erlauben, wenn der interne Druck höher ist als ein nachgelagerter Druck,
- Ausgabe (806, 812, 814) des gasförmigen Ammoniaks der bestimmten Zelle der Verbrauchseinheit (30) unabhängig von den anderen Zellen über eine Ausgangsschnittstelle (40), die an die Vielzahl von Zellen (10) an die Verbrauchseinheit (30) angeschlossen ist.

**15.** Verfahren gemäß Anspruch 14, **dadurch gekennzeichnet, dass** das System umfasst:

- für jede Zelle (10) eine Ausgangsklappe (402) die den Ausgang von gasförmigem Ammoniak der Zelle (10) erlaubt, wenn der interne Druck größer ist als ein nachgelagerter Druck der Ausgangsklappe (402),
- ein Regulierungsmittel des Durchsatzes (20) von gasförmigem Ammoniak zur Verbrauchseinheit (30),

wobei die Ausgabestufe Unterstufen umfasst, bestehend in:

o der Übertragung (806) des gasförmigen Ammoniaks der bestimmten Zelle (10) auf einen gemeinsamen Kanal (404), der den Ausgangsklappen (402) nachgelagert ist, der die Ausgangsklappen (402) der Vielzahl von Zellen (10) und das Regulierungsmittel des Durchsatzes (20) anschließt, in dem die Öffnung der Ausgangsklappe (402) der bestimmten Zelle (10) per Druckdifferenz zwischen der bestimmten Zelle (10) und dem gemeinsamen Kanal (404) hervorgerufen wird,
o dem Hervorrufen (812) des Verschlusses der Ausgangsklappen (402) der anderen Zellen per Druckdifferenz zwischen dem gemeinsamen Kanal (404) und den anderen Zellen,
o dem Öffnen (814) des Regulierungsmittels (20), um der Verbrauchseinheit (30) den gasförmigen Ammoniak, der an den gemeinsamen Kanal (404) übertragen wird, zu liefern.

**16.** Verfahren gemäß Anspruch 15, umfassend darüber hinaus die Stufen, bestehend in:

- der Realisierung (802) einer Beurteilung des internen Drucks jeder Zelle (10) in Abhängigkeit von der Steuerung von Anpassungsmitteln des Drucks (104) der Zelle,
- der Erfassung (808) der Überschreitung eines Schwellenwertes durch den internen Druck der bestimmten Zelle (10), die einer Öffnung der Ausgangsklappe (402) der bestimmten Zelle (10) entspricht,
- nach der Erfassung der Überschreitung Realisierung (810) einer Beurteilung des internen Drucks für die bestimmte Zelle (10) in Abhängigkeit von einem am gemeinsamen Kanal (404) gemessenen Druck,
- Realisierung (816) einer Eichung durch Eichmittel der gasförmigen Ammoniakmenge, die von jeder Zelle (10) in Abhängigkeit von den Variationen des gemessenen Drucks gelagert wird.

**17.** Verfahren gemäß Anspruch 14 bis 16, **dadurch gekennzeichnet, dass** es die Stufen umfasst, bestehend in:

- der Berechnung (818) eines Bedeutungskoffizienten für jede Zelle (10) in Abhängigkeit von einer von Eichmitteln geeichten Ammoniakmenge der Merkmale des Lagermaterials, einer Zustandsvariablen der Zelle und einer Zustandsvariablen des externen Milieus,
- dem Vergleich (802) der Bedeutungskoeffizienten zur Bestimmung der bestimmten Zelle (10).

**Claims**

1. System for storage of ammonia gas and for its delivery to a consumption unit (30), the system comprising:

   - a plurality of ammonia gas storage cells (10) each comprising:

      o a storage material (102) capable of absorbing ammonia gas,
      o means for adjusting internal pressure of each cell independently of the other cells, comprising a heating means (106),

   - an output interface (40) connecting the plurality of cells (10) to the consumption unit (30), for output of ammonia gas from the cell (10) when the internal pressure is higher than a downstream pressure,
   - a control device (50) common to the plurality of cells (10) capable of independently controlling the ammonia delivery activity from each cell (10) to the output interface (40) through means (502) controlling means for adjusting the internal pressure (106) of the plurality of cells (10),

   the system being **characterised in that** it also comprises:

   - a common inlet interface (60) comprising a common inlet channel (602) connecting the plurality of cells (10), the common channel (602) being connectable to a filling means (70) to fill in the cells (10) in parallel during a filling operation, or
   - for each cell (10), an inlet interface (60) connectable to a filling means (70) to fill the cell (10) independently of the other cells.

2. System according to claim 1, **characterised in that** for each cell (10), the outlet interface (40) comprises an outlet valve (402) that allows the ammonia gas to escape from the cell (10) when the internal pressure is higher than a pressure downstream from the outlet valve (402).

3. System according to claim 2, **characterised in that**:

   - the system comprises a flow control means (20) for the gas flow to the consumption unit (30), the outlet interface (40) connecting the plurality of cells (10) to the flow control means (20), and
   - the outlet interface (40) comprises a common channel (404) downstream from the outlet valves (402) connecting the outlet valves (402) of the plurality of cells (10) and the flow control means (20) such that opening one outlet valve (402) causes the other outlet valves (402) to close due to the pressure difference,
   - the control device (50) comprises means (502) controlling the flow control means (20).

4. System according to claim 3, **characterised in that** the control device (50) comprises a pressure sensor (504) in the outlet interface (40).

5. System according to claim 4, **characterised in that** the common control system (50) is capable of estimating the internal pressure of each cell (10) as a function of the control of the pressure adjustment means (104) of the cell (10) and measuring a parameter chosen in a group comprising status variables of the cell (10) and the pressure measured by the pressure sensor (504) of the outlet interface (40).

6. System according to any one of claims 1 to 5, **characterised in that** the flow control means (40) is a solenoid valve.

7. System according to any one of claims 1 to 6, **characterised in that** at least one means for adjusting internal pressure comprises a cooling means (108).

8. System according to any one of claims 1 to 7, **characterised in that** the storage material (102) of at least one cell (10) is distributed in a plurality of compartments free to communicate with each other.

9. System according to any one of claims 1 to 8, **characterised in that** the storage material (102) comprises a powder salt of an alkali earth metal chloride.

10. System according to any one of claims 1 to 9, **characterised in that**, for each cell (10), the inlet interface (60), connectable to a filling means (70) to fill the cell (10) independently of the other cells is distinct from the outlet interface (40).

11. System according to any one of claims 1 to 10, **characterised in that** the inlet interface (60) or the plurality of inlet interfaces comprises a passive non-return inlet valve (604) allowing the ammonia gas inlet into the plurality of cells (10) or one of the plurality of cells when the internal pressure is less than a pressure on the upstream side of the inlet valve (604).

12. System according to any one of claims 1 to 9, **characterised in that** the outlet interface (40) is the inlet interface that can be connected to a filling means (70) to fill the cell (10) independently of the other cells.

13. System according to any one of claims 10 to 12, **characterised in that** each cell (10) can be disassembled independently of the other cells (10) so that a filling operation can be done.

14. Method for delivering ammonia gas to a consumption unit (30) through a system according to one of claims 1 to 13, the method being **characterised in that** it comprises the following steps:

   - determining a given cell among the plurality of storage cells (10),
   - controlling means for adjusting the internal pressure in the plurality of cells, the step including an increase (804) in an internal pressure in the given cell (10) independently of the other cells, so that ammonia gas can be output from the cell (10) when the internal pressure is higher than a downstream pressure,
   - delivering (806, 812, 814) ammonia gas from the given cell to the consumption unit (30) independently of the other cells through an outlet interface (40) connecting the plurality of cells (10) to the consumption unit (30).

15. Method according to claim 14, **characterised in that** the system comprises:

   - for each cell (10), an outlet valve (402) so that ammonia gas can be output from the cell (10) when the internal pressure is greater than a pressure downstream from the outlet valve (402),
   - a flow control means (20) controlling the ammonia gas flow to the consumption unit (30),

   the delivery step including the following substeps:

   o transmitting (806) ammonia gas from the given cell (10) to a common channel (404), downstream from the outlet valves (402), connecting the outlet valves (402) of the plurality of cells (10) and the flow control means (20), by causing opening of the outlet valve (402) of the given cell (10) due to the pressure difference between the given cell (10) and the common channel (404),
   o causing (812) closure of the outlet valves (402) of the other cells due to the pressure difference between the common channel (404) and the other cells,
   ∘ opening (814) the control means (20) to output ammonia gas transmitted to the common channel (404) to the consumption unit (30).

16. Method according to claim 15, also comprising steps as follows:

   - estimating (802) the internal pressure in each cell (10) as a function of the control of the means for adjusting pressure (104) of the cell,
   - detecting (808) when the internal pressure in the given cell (10) exceeds a threshold value corresponding to opening of the outlet valve (402) of the given cell (10),
   - after detection that the value was exceeded, making an estimate (810) of the internal pressure for the given cell (10) as a function of a measured pressure at the common channel (404),
   - gauging (816) the quantity of ammonia gas stored by each cell (10) as a function of variations in the measured pressure, using gauging means.

17. Method according to any one of claims 14 to 16, **characterised in that** it comprises the following steps:

   - calculating (818) a coefficient of interest for each cell (10), as a function of a quantity of ammonia gauged using gauge means, characteristics of the storage material, a status variable of the cell and a status variable of the external environment,
   - comparing (820) coefficients of interest to determine the given cell (10).

FIG 1

FIG 2a

**FIG 2b**

**FIG 3**

FIG 4

```
┌─────────────────────────────┐
│             802             │
└─────────────────────────────┘
              │
              ▼
┌─────────────────────────────┐
│             804             │
└─────────────────────────────┘
              │
              ▼
┌─────────────────────────────┐
│             806             │
└─────────────────────────────┘
              │
              ▼
┌─────────────────────────────┐
│             808             │
└─────────────────────────────┘
              │
              ▼
┌─────────────────────────────┐
│             810             │
└─────────────────────────────┘
              │
              ▼
┌─────────────────────────────┐
│             812             │
└─────────────────────────────┘
              │
              ▼
┌─────────────────────────────┐
│             814             │
└─────────────────────────────┘
              │
              ▼
┌─────────────────────────────┐
│             816             │
└─────────────────────────────┘
              │
              ▼
┌─────────────────────────────┐
│             818             │
└─────────────────────────────┘
              │
              ▼
┌─────────────────────────────┐
│             820             │
└─────────────────────────────┘
```

## FIG 5

Calcul opportunité d'utilisation cellule
Calibration spécifique pour cellule i

FIG 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20010053342 A
- EP 2181963 A
- US 20100021780 A